# EUROPEAN PATENT APPLICATION

(11) **EP 4 489 135 A1**
(43) Date of publication of application: **08.01.2025**
(21) Application number: 23759615.0
(22) Date of filing: 01.02.2023
(51) Int. Cl.: H01M 4/62, C08K 7/06, C08L 101/14, H01M 4/13, H01M 4/139, H01M 10/052, H01M 10/0566

(54) **BINDER COMPOSITION FOR NONAQUEOUS SECONDARY BATTERY POSITIVE ELECTRODE, CONDUCTIVE MATERIAL DISPERSION FOR NONAQUEOUS SECONDARY BATTERY POSITIVE ELECTRODE, SLURRY COMPOSITION FOR NONAQUEOUS SECONDARY BATTERY POSITIVE ELECTRODE, NONAQUEOUS SECONDARY BATTERY POSITIVE ELECTRODE, AND NONAQUEOUS SECONDARY BATTERY**

(30) Priority: 28.02.2022 JP 2022030456
(71) Applicant: Zeon Corporation, Tokyo 100-8246 (JP)
(72) Inventor: MIYAMAE, Tsubasa, Tokyo 100-8246 (JP)
(74) Representative: Maiwald GmbH
(86) International application number: PCT/JP2023/003289
(87) International publication number: WO 2023/162609

(57) **Abstract**

Provided is a binder composition for a non-aqueous secondary battery positive electrode that is capable of producing a conductive material dispersion liquid having excellent conductive material dispersibility. The binder composition for a non-aqueous secondary battery positive electrode contains a polymer. This polymer includes a nitrile group-containing monomer unit, an alkylene structural unit, and a hydrophilic group-containing monomer unit. The proportional content of the hydrophilic group-containing monomer unit in the polymer is 6.5 mass% or more. An 8 mass% aqueous solution of the polymer has a haze of 70% or less at a pH of 8.0 or higher.

## Description

### TECHNICAL FIELD

The present disclosure relates to a binder composition for a non-aqueous secondary battery positive electrode, a conductive material dispersion liquid for a non-aqueous secondary battery positive electrode, a slurry composition for a non-aqueous secondary battery positive electrode, a positive electrode for a non-aqueous secondary battery, and a non-aqueous secondary battery.

### BACKGROUND

Non-aqueous secondary batteries (hereinafter, also referred to simply as "secondary batteries"), such as lithium ion secondary batteries, have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

A positive electrode for a non-aqueous secondary battery generally includes a current collector and an electrode mixed material layer (positive electrode mixed material layer) formed on the current collector. The positive electrode mixed material layer is formed using, for example, a slurry composition that contains a positive electrode active material, a binder-containing binder composition, and so forth dispersed in a dispersion medium.

In recent years, attempts have been made to improve binder compositions used in the formation of positive electrode mixed material layers serving as constituent elements of electrodes in non-aqueous secondary batteries in order to further improve non-aqueous secondary battery performance.

Specifically, various binder compositions for non-aqueous secondary battery electrodes that include nitrile group-containing monomer units and hydrogenated conjugated diene monomer units have been studied and provided (for example, refer to PTL 1 to 5).

### CITATION LIST

### Patent Literature

PTL 1: WO2013/080989A1
PTL 2: JP2013-179040A
PTL 3: WO2019/181869A1
PTL 4: JP2020-019705A
PTL 5: JP2020-187866A

### SUMMARY

### (Technical Problem)

From a viewpoint of increasing the producibility and performance of a secondary battery, it is desirable for a binder composition to increase the dispersibility of a conductive material dispersion liquid that is obtained by mixing the binder composition with carbon nanotubes serving as a conductive material.

However, there is room for improvement of conductive material dispersibility in an obtained conductive material dispersion liquid when using binder compositions of the conventional techniques mentioned above.

Accordingly, one object of the present disclosure is to provide a binder composition for a non-aqueous secondary battery positive electrode that is capable of producing a conductive material dispersion liquid having excellent conductive material dispersibility.

Another object of the present disclosure is to provide a conductive material dispersion liquid for a non-aqueous secondary battery positive electrode having excellent conductive material dispersibility.

Another object of the present disclosure is to provide a slurry composition for a non-aqueous secondary battery positive electrode produced using this conductive material dispersion liquid for a non-aqueous secondary battery positive electrode.

Another object of the present disclosure is to provide a positive electrode for a non-aqueous secondary battery including a positive electrode mixed material layer formed using this slurry composition for a non-aqueous secondary battery positive electrode.

Another object of the present disclosure is to provide a non-aqueous secondary battery including this positive electrode for a non-aqueous secondary battery.

### (Solution to Problem)

The inventor made extensive studies to achieve the objects set forth above. The inventor discovered that by using a binder composition containing a polymer that includes a nitrile group-containing monomer unit, an alkylene structural unit, and a hydrophilic group-containing monomer unit, that has a proportional content of the hydrophilic group-containing monomer unit that is not less than a specific value, and that has a specific property, it is possible to produce a conductive material dispersion liquid having excellent conductive material dispersibility, and, in this manner, the inventor completed the present disclosure.

Specifically, the present disclosure aims to advantageously solve the problem set forth above, and, according to the present disclosure, binder compositions for a non-aqueous secondary battery positive electrode according to the following {1} to {8}, conductive material dispersion liquids for a non-aqueous secondary battery positive electrode according to the following {9} and {10}, a slurry composition for a non-aqueous secondary battery positive electrode according to the following {11}, a positive electrode for a non-aqueous secondary battery according to the following {12}, and a non-aqueous secondary battery according to the following {13} are provided.
{1} A binder composition for a non-aqueous secondary battery positive electrode comprising a polymer, wherein the polymer includes a nitrile group-containing monomer unit, an alkylene structural unit, and a hydrophilic group-containing monomer unit, proportional content of the hydrophilic group-containing monomer unit in the polymer is 6.5 mass% or more, and an 8 mass% aqueous solution of the polymer has a haze of 70% or less at a pH of 8.0 or higher.

Through a binder composition for a non-aqueous secondary battery positive electrode in which a polymer having a specific chemical composition and property is compounded in this manner, it is possible to produce a conductive material dispersion liquid having excellent conductive material dispersibility.

Note that a "monomer unit" of a polymer referred to in the present disclosure means "a repeating unit derived from the monomer that is included in a polymer obtained using the monomer".

Also note that the proportional contents of various types of repeating units (monomer units and structural units) in a polymer referred to in the present disclosure can be measured by a nuclear magnetic resonance (NMR) method such as ¹H-NMR.

Moreover, the haze of an 8 mass% aqueous solution of a polymer referred to in the present disclosure can be measured according to a method described in the EXAMPLES section of the present specification.

{2} The binder composition for a non-aqueous secondary battery positive electrode according to the foregoing {1}, wherein total proportional content of the alkylene structural unit and a conjugated diene monomer unit in the polymer is not less than 30 mass% and not more than 80 mass%.

When the polymer includes an alkylene structural unit and a conjugated diene monomer unit in a proportion that, in total, is within the specific range set forth above, dispersibility of a conductive material in a conductive material dispersion liquid that is produced using the binder composition can be further improved.

{3} The binder composition for a non-aqueous secondary battery positive electrode according to the foregoing {1} or {2}, wherein proportional content of the nitrile group-containing monomer unit in the polymer is not less than 10 mass% and not more than 55 mass%.

When the polymer includes a nitrile group-containing monomer unit in a proportion that is within the specific range set forth above, dispersibility of a conductive material in a conductive material dispersion liquid that is produced using the binder composition can be further improved.

{4} The binder composition for a non-aqueous secondary battery positive electrode according to any one of the foregoing {1} to {3}, wherein the polymer has an iodine value of not less than 5 mg/100 mg and not more than 100 mg/100 mg.

When the iodine value of the polymer is within the specific range set forth above, the amount of the polymer that adsorbs to a conductive material increases, dispersibility of a conductive material in a conductive material dispersion liquid that is produced using the binder composition can be further improved, and viscosity stability of the conductive material dispersion liquid can also be improved. Moreover, when the iodine value of the polymer is within the specific range set forth above, adhesiveness of a positive electrode mixed material layer that is formed from a slurry composition produced using the conductive material dispersion liquid can be increased. Furthermore, when the iodine value of the polymer is within the specific range set forth above, cycle characteristics and high-temperature storage characteristics of a secondary battery that includes the positive electrode mixed material layer can be improved.

Note that the iodine value of a polymer can be measured according to a method described in the EXAMPLES section of the present specification.

{5} The binder composition for a non-aqueous secondary battery positive electrode according to any one of the foregoing {1} to {4}, wherein the proportional content of the hydrophilic group-containing monomer unit in the polymer is 50 mass% or less.

When the proportional content of the hydrophilic group-containing monomer unit in the polymer is not more than the specific value set forth above, dispersibility of a conductive material in a conductive material dispersion liquid that is produced using the binder composition can be further improved, and viscosity stability of the conductive material dispersion liquid can also be improved. Moreover, when the proportional content of the hydrophilic group-containing monomer unit in the polymer is not more than the specific value set forth above, adhesiveness of a positive electrode mixed material layer that is formed from a slurry composition produced using the conductive material dispersion liquid can be increased, and high-temperature storage characteristics of a secondary battery that includes the positive electrode mixed material layer can also be improved.

{6} The binder composition for a non-aqueous secondary battery positive electrode according to any one of the foregoing {1} to {5}, wherein the polymer has a weight-average molecular weight of not less than 2,000 and not more than 200,000.

When the weight-average molecular weight of the polymer is not more than the specific value set forth above, the amount of the polymer that adsorbs to a conductive material increases, dispersibility of a conductive material in a conductive material dispersion liquid that is produced using the binder composition can be further improved, and viscosity stability of the conductive material dispersion liquid can also be improved. Moreover, when the weight-average molecular weight of the polymer is not more than the specific value set forth above, adhesiveness of a positive electrode mixed material layer that is formed from a slurry composition produced using the conductive material dispersion liquid can be increased. Furthermore, when the weight-average molecular weight of the polymer is not more than the specific value set forth above, cycle characteristics and high-temperature storage characteristics of a secondary battery that includes the positive electrode mixed material layer can be improved.

Note that the weight-average molecular weight of a polymer can be measured according to a method described in the EXAMPLES section of the present specification.

{7} The binder composition for a non-aqueous secondary battery positive electrode according to any one of the foregoing {1} to {6}, wherein the polymer does not include a (meth)acrylic acid ester monomer unit.

By using a polymer that does not include a (meth)acrylic acid ester monomer unit, it is possible to further improve dispersibility of a conductive material in a conductive material dispersion liquid that is produced using the binder composition.

{8} The binder composition for a non-aqueous secondary battery positive electrode according to any one of the foregoing {1} to {7}, wherein the polymer does not include an aromatic vinyl monomer unit.

By using a polymer that does not include an aromatic vinyl monomer unit, it is possible to further improve dispersibility of a conductive material in a conductive material dispersion liquid that is produced using the binder composition.

{9} A conductive material dispersion liquid for a non-aqueous secondary battery positive electrode comprising: a conductive material including one or more carbon nanotubes; a dispersion medium; and the binder composition for a non-aqueous secondary battery positive electrode according to any one of the foregoing {1} to {8}.

By using any one of the binder compositions for a non-aqueous secondary battery positive electrode set forth above together with carbon nanotubes serving as a conductive material in this manner, it is possible to obtain a conductive material dispersion liquid having excellent conductive material dispersibility.

{10} The conductive material dispersion liquid for a non-aqueous secondary battery positive electrode according to the foregoing {9}, wherein a value of volume-average particle diameter D50 in a particle size distribution of dispersed particle diameter of the carbon nanotubes is not less than 0.1 µm and not more than 7.0 µm.

When the volume-average particle diameter D50 in a particle size distribution of dispersed particle diameter of the carbon nanotubes in the conductive material dispersion liquid is within the specific range set forth above, dispersibility of the carbon nanotubes serving as a conductive material in the conductive material dispersion liquid can be further improved.

Note that the volume-average particle diameter D50 in a particle size distribution of dispersed particle diameter of carbon nanotubes can be measured according to a method described in the EXAMPLES section of the present specification.

{ 11} A slurry composition for a non-aqueous secondary battery positive electrode comprising: a positive electrode active material; and the conductive material dispersion liquid for a non-aqueous secondary battery positive electrode according to the foregoing {9} or {10}.

With a slurry composition for a non-aqueous secondary battery positive electrode that contains the conductive material dispersion liquid set forth above, it is possible to form a positive electrode including a positive electrode mixed material layer that can cause a secondary battery to display excellent battery characteristics (for example, cycle characteristics and high-temperature storage characteristics).

{12} A positive electrode for a non-aqueous secondary battery comprising a positive electrode mixed material layer formed using the slurry composition for a non-aqueous secondary battery positive electrode according to the foregoing {11}.

By using a positive electrode that includes a positive electrode mixed material layer formed using the slurry composition for a non-aqueous secondary battery positive electrode set forth above in this manner, it is possible to stably obtain a non-aqueous secondary battery having excellent battery characteristics such as cycle characteristics and high-temperature storage characteristics, for example.

{13} A non-aqueous secondary battery comprising: the positive electrode for a non-aqueous secondary battery according to the foregoing {12}; a negative electrode; a separator; and an electrolyte solution.

By using the positive electrode for a non-aqueous secondary battery set forth above in this manner, it is possible to obtain a non-aqueous secondary battery that has excellent battery characteristics such as cycle characteristics and high-temperature storage characteristics, for example.

### (Advantageous Effect)

According to the present disclosure, it is possible to provide a binder composition for a non-aqueous secondary battery positive electrode that is capable of producing a conductive material dispersion liquid having excellent conductive material dispersibility.

Moreover, according to the present disclosure, it is possible to provide a conductive material dispersion liquid for a non-aqueous secondary battery positive electrode having excellent conductive material dispersibility.

Furthermore, according to the present disclosure, it is possible to provide a slurry composition for a non-aqueous secondary battery positive electrode produced using this conductive material dispersion liquid for a non-aqueous secondary battery positive electrode.

Also, according to the present disclosure, it is possible to provide a positive electrode for a non-aqueous secondary battery including a positive electrode mixed material layer formed using this slurry composition for a non-aqueous secondary battery positive electrode.

Moreover, according to the present disclosure, it is possible to provide a non-aqueous secondary battery including this positive electrode for a non-aqueous secondary battery.

### DETAILED DESCRIPTION

The following provides a detailed description of embodiments of the present disclosure.

A presently disclosed binder composition for a non-aqueous secondary battery positive electrode can be used in production of a presently disclosed conductive material dispersion liquid for a non-aqueous secondary battery positive electrode. Moreover, the presently disclosed conductive material dispersion liquid for a non-aqueous secondary battery positive electrode can be used in production of a presently disclosed slurry composition for a non-aqueous secondary battery positive electrode. Furthermore, the presently disclosed slurry composition for a non-aqueous secondary battery positive electrode can be used in production of a positive electrode of a non-aqueous secondary battery such as a lithium ion secondary battery. Also, a feature of a presently disclosed non-aqueous secondary battery is that a presently disclosed positive electrode for a non-aqueous secondary battery that is formed using the presently disclosed slurry composition for a non-aqueous secondary battery positive electrode is used therein.

### (Binder composition for non-aqueous secondary battery positive electrode)

The presently disclosed binder composition for a non-aqueous secondary battery positive electrode is a binder composition for a non-aqueous secondary battery positive electrode that contains a specific polymer. Features of the specific polymer are that the polymer includes a nitrile group-containing monomer unit, an alkylene structural unit, and a hydrophilic group-containing monomer unit, that the proportional content of hydrophilic group-containing monomer units in the polymer is 6.5 mass% or more, and that an 8 mass% aqueous solution of the polymer has a haze of 70% or less at a pH of 8.0 or higher. The presently disclosed binder composition for a non-aqueous secondary battery positive electrode is capable of producing a conductive material dispersion liquid having excellent conductive material dispersibility as a result of containing a polymer that has the specific chemical composition and property set forth above. The presently disclosed binder composition for a non-aqueous secondary battery positive electrode may optionally further contain a solvent and other components in addition to the specific polymer.

### <Polymer>

The polymer is a component that can cause good dispersion of carbon nanotubes serving as a conductive material in a conductive material dispersion liquid that is produced using the binder composition. In addition, the polymer is a component that can display a function of holding components contained in a positive electrode mixed material layer so that these components are not shed from the positive electrode mixed material layer.

### «Chemical composition of polymer»

The polymer is required to include a nitrile group-containing monomer unit, an alkylene structural unit, and a hydrophilic group-containing monomer unit. In addition, the polymer may optionally further include repeating units other than a nitrile group-containing monomer unit, an alkylene structural unit, and a hydrophilic group-containing monomer unit.

### [Nitrile group-containing monomer unit]

A nitrile group-containing monomer unit is a repeating unit that is derived from a nitrile group-containing monomer. Examples of nitrile group-containing monomers that can form a nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Of these examples, acrylonitrile and methacrylonitrile are preferable, and acrylonitrile is more preferable as a nitrile group-containing monomer.

One of these nitrile group-containing monomers can be used individually, or two or more of these nitrile group-containing monomers can be used in combination.

The proportional content of nitrile group-containing monomer units in the polymer when all repeating units (total of structural units and monomer units) in the polymer are taken to be 100 mass% is preferably 10 mass% or more, more preferably 20 mass% or more, and even more preferably 30 mass% or more, and is preferably 55 mass% or less, and more preferably 40 mass% or less. When the proportional content of nitrile group-containing monomer units in the polymer is within any of the specific ranges set forth above, dispersibility of a conductive material in a conductive material dispersion liquid that is produced using the binder composition can be further improved.

Note that the proportional content of nitrile group-containing monomer units in the polymer when all repeating units (total of structural units and monomer units) in the polymer are taken to be 100 mass% may be 30 mass% or less.

### [Alkylene structural unit]

An alkylene structural unit is a repeating unit that is composed of only an alkylene structure represented by a general formula: -CₙH₂ₙ- (n is an integer of 2 or more). The inclusion of an alkylene structural unit in the polymer can improve dispersibility of a conductive material in a conductive material dispersion liquid that is produced using the binder composition.

Although the alkylene structural unit may be linear or branched, the alkylene structural unit is preferably linear (i.e., is preferably a linear alkylene structural unit) from a viewpoint of further improving dispersibility of a conductive material in a conductive material dispersion liquid. Moreover, the carbon number of the alkylene structural unit is preferably 4 or more (i.e., n in the preceding general formula -CₙH₂ₙ- is preferably an integer of 4 or more).

No specific limitations are placed on the method by which the alkylene structural unit is introduced into the polymer. For example, the following methods (1) and (2) may be used.
(1) A method in which a polymer is produced from a monomer composition containing a conjugated diene monomer and is then hydrogenated to convert a conjugated diene monomer unit to an alkylene structural unit
(2) A method in which a polymer is produced from a monomer composition containing a 1-olefin monomer

Of these methods, method (1) is preferable in terms of ease of production of the polymer.

In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene unit (i.e., is more preferably a hydrogenated 1,3-butadiene unit).

Moreover, the 1-olefin monomer may be 1-butene, 1-hexene, or the like, for example.

One of these conjugated diene monomers or 1-olefin monomers can be used individually, or two or more of these conjugated diene monomers or 1-olefin monomers can be used in combination.

The conjugated diene monomer that can be used in method (1) may be a conjugated diene compound such as 1,3-butadiene, isoprene, 2,3-dimethyl-1,3-butadiene, or 1,3-pentadiene, for example. Of these conjugated diene monomers, 1,3-butadiene is preferable. In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene unit (i.e., is more preferably a hydrogenated 1,3-butadiene unit). The hydrogenation can be performed by a commonly known method such as described further below.

Note that when an alkylene structural unit is introduced into the polymer through method (1), a conjugated diene monomer unit can remain in the polymer in a situation in which conjugated diene monomer units are not fully hydrogenated. In other words, the polymer may optionally include a conjugated diene monomer unit as a repeating unit.

The total proportional content of alkylene structural units and conjugated diene monomer units in the polymer when all repeating units (total of structural units and monomer units) in the polymer are taken to be 100 mass% is preferably 30 mass% or more, more preferably 50 mass% or more, and even more preferably 60 mass% or more, and is preferably 80 mass% or less, more preferably 75 mass% or less, and even more preferably 70 mass% or less. When the total proportional content of alkylene structural units and conjugated diene monomer units in the polymer is within any of the specific ranges set forth above, dispersibility of a conductive material in a conductive material dispersion liquid that is produced using the binder composition can be further improved.

Note that the total proportional content of alkylene structural units and conjugated diene monomer units in the polymer when all repeating units (total of structural units and monomer units) in the polymer are taken to be 100 mass% may be 60 mass% or less.

In a case in which the polymer does not include a conjugated diene monomer unit (for example, a case in which conjugated diene monomer units are fully hydrogenated in method (1) or a case in which the polymer is produced by method (2)), the proportional content of alkylene structural units in the polymer when all repeating units (total of structural units and monomer units) in the polymer are taken to be 100 mass% is preferably 30 mass% or more, more preferably 50 mass% or more, and even more preferably 60 mass% or more, and is preferably 80 mass% or less, more preferably 75 mass% or less, and even more preferably 70 mass% or less. When the proportional content of alkylene structural units in the polymer is within any of the specific ranges set forth above, dispersibility of a conductive material in a conductive material dispersion liquid that is produced using the binder composition can be further improved.

Note that in a case in which the polymer does not include a conjugated diene monomer unit, the proportional content of alkylene structural units in the polymer when all repeating units (total of structural units and monomer units) in the polymer are taken to be 100 mass% may be 60 mass% or less.

### [Hydrophilic group-containing monomer unit]

A hydrophilic group-containing monomer unit is a repeating unit that is derived from a hydrophilic group-containing monomer.

Examples of hydrophilic group-containing monomers that can form a hydrophilic group-containing monomer unit include carboxy group-containing monomers, sulfo group-containing monomers, phosphate group-containing monomers, and hydroxy group-containing monomers.

Examples of carboxy group-containing monomers include monocarboxylic acids, derivatives of monocarboxylic acids, dicarboxylic acids, acid anhydrides of dicarboxylic acids, and derivatives of these dicarboxylic acids and acid anhydrides.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group upon hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

In the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, ethyl-(meth)acryloyloxyethyl phosphate, vinylphosphonic acid, and dimethyl vinylphosphonate.

In the present disclosure, "(meth)acryloyl" is used to indicate "acryloyl" and/or "methacryloyl".

Examples of hydroxy group-containing monomers include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula: CH₂=CR¹-CO-(CₙH₂ₙO)ₘ-H (m represents an integer of 2 to 9, n represents an integer of 2 to 4, and R¹ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

From a viewpoint of further improving dispersibility of a conductive material in a conductive material dispersion liquid that is produced using the binder composition, a monomer that includes a carboxy group (carboxy group-containing monomer) is preferable, a monocarboxylic acid is more preferable, and methacrylic acid is even more preferable as a hydrophilic group-containing monomer.

The proportional content of hydrophilic group-containing monomer units in the polymer when all repeating units (total of structural units and monomer units) in the polymer are taken to be 100 mass% is required to be 6.5 mass% or more, is preferably 8 mass% or more, more preferably 9 mass% or more, and even more preferably 10 mass% or more, and is preferably 50 mass% or less, more preferably 35 mass% or less, even more preferably 25 mass% or less, and further preferably 15 mass% or less.

Moreover, the proportional content of hydrophilic group-containing monomer units in the polymer when all repeating units (total of structural units and monomer units) in the polymer are taken to be 100 mass% may be 10 mass% or less.

### [Other monomer units]

The polymer may further include monomer units (hereinafter, also referred to as "other monomer units") other than the above-described nitrile group-containing monomer unit, alkylene structural unit, conjugated diene monomer unit, and hydrophilic group-containing monomer unit as repeating units.

The proportional content of other monomer units in the polymer when all repeating units (total of structural units and monomer units) in the polymer are taken to be 100 mass% is preferably 5 mass% or less, more preferably 4 mass% or less, even more preferably 3 mass% or less, further preferably 2 mass% or less, and even further preferably 1 mass% or less. When the proportional content of other monomer units in the polymer is not more than any of the upper limits set forth above, the amount of the polymer that adsorbs to a conductive material increases, dispersibility of a conductive material in a conductive material dispersion liquid that is produced using the binder composition can be further improved, and viscosity stability of the conductive material dispersion liquid can also be improved. Moreover, when the proportional content of other monomer units in the polymer is not more than any of the upper limits set forth above, adhesiveness of a positive electrode mixed material layer that is formed from a slurry composition produced using the conductive material dispersion liquid can be increased. Furthermore, when the proportional content of other monomer units in the polymer is not more than any of the upper limits set forth above, cycle characteristics and high-temperature storage characteristics of a secondary battery that includes the positive electrode mixed material layer can be improved.

The lower limit for the proportional content of other monomer units in the polymer is not specifically limited and can be set as 0 mass% or more, for example. Furthermore, from a viewpoint of even further improving dispersibility of a conductive material in a conductive material dispersion liquid that is produced using the binder composition, it is particularly preferable that the proportional content of other monomer units in the polymer is 0 mass%. In other words, it is particularly preferable that the polymer does not include monomer units other than a nitrile group-containing monomer unit, an alkylene structural unit, a conjugated diene monomer unit, and a hydrophilic group-containing monomer unit.

Examples of monomers that can form other monomer units include, but are not specifically limited to, (meth)acrylic acid ester monomers and aromatic vinyl monomers.

One of these monomers can be used individually, or two or more of these monomers can be used in combination. In the present disclosure, "(meth)acryl" is used to indicate "acryl" and/or "methacryl".

### -(Meth)acrylic acid ester monomer unit-

A (meth)acrylic acid ester monomer unit is a repeating unit that is derived from a (meth)acrylic acid ester monomer.

Examples of (meth)acrylic acid ester monomers include acrylic acid alkyl ester monomers such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

The proportional content of (meth)acrylic acid ester monomer units in the polymer when all repeating units (total of structural units and monomer units) in the polymer are taken to be 100 mass% is preferably 5 mass% or less, more preferably 4 mass% or less, even more preferably 3 mass% or less, further preferably 2 mass% or less, and even further preferably 1 mass% or less. When the proportional content of (meth)acrylic acid ester monomer units in the polymer is not more than any of the upper limits set forth above, the amount of the polymer that adsorbs to a conductive material increases, dispersibility of a conductive material in a conductive material dispersion liquid that is produced using the binder composition can be further improved, and viscosity stability of the conductive material dispersion liquid can also be improved. Moreover, when the proportional content of (meth)acrylic acid ester monomer units in the polymer is not more than any of the upper limits set forth above, adhesiveness of a positive electrode mixed material layer that is formed from a slurry composition produced using the conductive material dispersion liquid can be increased. Furthermore, when the proportional content of (meth)acrylic acid ester monomer units in the polymer is not more than any of the upper limits set forth above, cycle characteristics and high-temperature storage characteristics of a secondary battery that includes the positive electrode mixed material layer can be improved.

The lower limit for the proportional content of (meth)acrylic acid ester monomer units in the polymer is not specifically limited and can be set as 0 mass% or more, for example. Furthermore, from a viewpoint of even further improving dispersibility of a conductive material in a conductive material dispersion liquid that is produced using the binder composition, it is particularly preferable that the proportional content of (meth)acrylic acid ester monomer units in the polymer is 0 mass%. In other words, it is particularly preferable that the polymer does not include a (meth)acrylic acid ester monomer unit.

### -Aromatic vinyl monomer unit-

An aromatic vinyl monomer unit is a repeating unit that is derived from an aromatic vinyl monomer. Examples of aromatic vinyl monomers that can form an aromatic vinyl monomer unit include styrene, α-methylstyrene, vinyltoluene, and divinylbenzene. One of these aromatic vinyl monomers can be used individually, or two or more of these aromatic vinyl monomers can be used in combination.

The proportional content of aromatic vinyl monomer units in the polymer when all repeating units (total of structural units and monomer units) in the polymer are taken to be 100 mass% is preferably 5 mass% or less, more preferably 4 mass% or less, even more preferably 3 mass% or less, further preferably 2 mass% or less, and even further preferably 1 mass% or less. When the proportional content of aromatic vinyl monomer units in the polymer is not more than any of the upper limits set forth above, the amount of the polymer that adsorbs to a conductive material increases, dispersibility of a conductive material in a conductive material dispersion liquid that is produced using the binder composition can be further improved, and viscosity stability of the conductive material dispersion liquid can also be improved. Moreover, when the proportional content of aromatic vinyl monomer units in the polymer is not more than any of the upper limits set forth above, adhesiveness of a positive electrode mixed material layer that is formed from a slurry composition produced using the conductive material dispersion liquid can be increased. Furthermore, when the proportional content of aromatic vinyl monomer units in the polymer is not more than any of the upper limits set forth above, cycle characteristics and high-temperature storage characteristics of a secondary battery that includes the positive electrode mixed material layer can be improved.

The lower limit for the proportional content of aromatic vinyl monomer units in the polymer is not specifically limited and can be set as 0 mass% or more, for example. Furthermore, from a viewpoint of even further improving dispersibility of a conductive material in a conductive material dispersion liquid that is produced using the binder composition, it is particularly preferable that the proportional content of aromatic vinyl monomer units in the polymer is 0 mass%. In other words, it is particularly preferable that the polymer does not include an aromatic vinyl monomer unit.

### <Production method of polymer>

No specific limitations are placed on the method by which the above-described polymer is produced, and the method may, for example, be solution polymerization, suspension polymerization, bulk polymerization, or emulsion polymerization.

Moreover, the polymerization method may be addition polymerization such as ionic polymerization, radical polymerization, or living radical polymerization. Furthermore, a known polymerization initiator may be used as a polymerization initiator.

It is preferable that a molecular weight modifier that includes a sulfur-containing group such as a mercapto group is used in the polymerization. Examples of compounds including a mercapto group that may be used as a molecular weight modifier include mercapto group-containing compounds having a carbon number of 8 to 12 such as octyl mercaptan, 2,2,4,6,6-pentamethyl-4-heptanethiol, 2,4,4,6,6-pentamethyl-2-heptanethiol, 2,3,4,6,6-pentamethyl-2-heptanethiol, 2,3,4,6,6-pentamethyl-3-heptanethiol, t-dodecyl mercaptan, and n-dodecyl mercaptan; and mercapto group-containing compounds such as 2,2,4,6,6-pentamethyl-4-octanethiol, 2,2,4,6,6,8,8-heptamethyl-4-nonanethiol, bis(2-mercaptoethyl) sulfide, methyl 3-mercaptopropionate, and 1-butanethiol. Of these compounds, mercapto group-containing compounds having a carbon number of 8 to 12 are preferable, and t-dodecyl mercaptan is more preferable.

The amount of a mercapto group-containing compound that is compounded as a molecular weight modifier can be adjusted as appropriate such that the haze of an 8 mass% aqueous solution (pH 8.0 or higher) of the obtained polymer is not more than a specific value.

Note that in a case in which the above-described polymer is produced by method (1), radical polymerization using a redox polymerization initiator that includes an iron-based compound is preferably adopted as the polymerization method of the polymer that is to be hydrogenated. The redox polymerization initiator may be a combination of cumene hydroperoxide, ethylenediaminetetraacetic acid iron monosodium salt, sodium hydroxymethanesulfinate, and ethylenediaminetetraacetic acid tetrasodium salt (EDTA·4Na), or the like, for example, but is not specifically limited thereto.

In a case in which the above-described polymer is produced by method (1), although a coagulant may be added to a water dispersion of a pre-hydrogenation polymer (i.e., a precursor of the polymer) that is obtained after emulsion polymerization to cause coagulation, the pre-hydrogenation polymer may be collected, and then the collected pre-hydrogenation polymer may be subjected to hydrogenation (after optionally performing a "metathesis reaction" described further below), it is preferable that the water dispersion of the pre-hydrogenation polymer obtained after emulsion polymerization is subjected to hydrogenation in that form without being subjected to the above-described coagulation treatment. By performing hydrogenation of the water dispersion of the pre-hydrogenation polymer obtained through emulsion polymerization in that form without the water dispersion undergoing coagulation treatment, simple adjustment of the haze of an 8 mass% aqueous solution (pH 8.0 or higher) of the polymer to not more than a specific value is possible, and dispersibility of a conductive material in a conductive material dispersion liquid that is produced using the binder composition can be further improved, presumably due to the structure of the resultant post-hydrogenation polymer being maintained well.

The hydrogenation can be performed using a known hydrogenation method such as an oil-layer hydrogenation method or a water-layer hydrogenation method. The catalyst used in the hydrogenation may be any selective hydrogenation catalyst that is commonly known such as a palladium-based catalyst or a rhodium-based catalyst. Two or more of such catalysts may be used in combination.

The hydrogenation of the polymer may be performed by a method described in JP4509792B2, for example. Specifically, the hydrogenation of the polymer may be performed after subjecting the polymer to a metathesis reaction in the presence of a catalyst and a co-olefin.

The catalyst in the metathesis reaction may be a known ruthenium-based catalyst. Of such catalysts, Grubbs' catalysts such as bis(tricyclohexylphosphine)benzylidene ruthenium dichloride and 1,3-bis(2,4,6-trimethylphenyl)-2-(imidazolidinylidene)(dichlorophenylmethylene)(tricyclohexylphosphine)ruth enium are preferable as the catalyst in the metathesis reaction. The co-olefin may be an olefin having a carbon number of 2 to 16 such as ethylene, isobutene, or 1-hexene. Furthermore, a known homogeneous hydrogenation catalyst such as Wilkinson's catalyst ((PPh₃)₃RhCl), for example, can be used as a hydrogenation catalyst in hydrogenation performed after the metathesis reaction.

### <Properties of polymer>

### [Weight-average molecular weight]

The weight-average molecular weight of the polymer is preferably 2,000 or more, more preferably 5,000 or more, even more preferably 10,000 or more, further preferably 15,000 or more, and even further preferably 20,000 or more, and is preferably 200,000 or less, more preferably 170,000 or less, even more preferably 150,000 or less, further preferably 100,000 or less, even further preferably 50,000 or less, and particularly preferably 28,000 or less. When the weight-average molecular weight is not less than any of the lower limits set forth above, dispersibility of a conductive material in a conductive material dispersion liquid that is produced using the binder composition can be further improved. On the other hand, when the weight-average molecular weight of the polymer is not more than any of the upper limits set forth above, the amount of the polymer that adsorbs to a conductive material increases, dispersibility of a conductive material in a conductive material dispersion liquid that is produced using the binder composition can be further improved, and viscosity stability of the conductive material dispersion liquid can also be improved. Moreover, when the weight-average molecular weight of the polymer is not more than any of the upper limits set forth above, adhesiveness of a positive electrode mixed material layer that is formed from a slurry composition produced using the conductive material dispersion liquid can be increased. Furthermore, when the weight-average molecular weight of the polymer is not more than any of the upper limits set forth above, cycle characteristics and high-temperature storage characteristics of a secondary battery that includes the positive electrode mixed material layer can be improved.

Note that the weight-average molecular weight of the polymer may be 25,000 or more, or may be 25,000 or less.

The average molecular weight of the polymer can be controlled by adjusting the amount of molecular weight modifier that is compounded in polymerization, for example.

### [Haze]

The haze of an 8 mass% aqueous solution of the polymer at a pH of 8.0 or higher is required to be 70% or less, and is preferably 68% or less, more preferably 64% or less, even more preferably 58% or less, further preferably 50% or less, even further preferably 40% or less, and particularly preferably 30% or less. When the haze of the above-described specific aqueous solution of the polymer is 70% or less, the amount of the polymer that adsorbs to a conductive material increases, and dispersibility of a conductive material in a conductive material dispersion liquid that is produced using the binder composition can sufficiently be improved. Moreover, when the haze of the above-described specific aqueous solution of the polymer is not more than any of the upper limits set forth above, the amount of the polymer that adsorbs to a conductive material further increases, and thus dispersibility of a conductive material in a conductive material dispersion liquid that is produced using the binder composition can be further improved, and viscosity stability of the conductive material dispersion liquid can also be improved. Furthermore, when the haze of the above-described specific aqueous solution of the polymer is not more than any of the upper limits set forth above, adhesiveness of a positive electrode mixed material layer that is formed from a slurry composition produced using the conductive material dispersion liquid can be increased. Also, when the haze of the above-described specific aqueous solution of the polymer is not more than any of the upper limits set forth above, it is presumed that as a result of the polymer trapping moisture in the positive electrode mixed material layer, which makes impairment of charging and discharging functionality by moisture less likely to occur, cycle characteristics and high-temperature storage characteristics of a secondary battery can be improved.

Although no specific limitations are placed on the lower limit for the haze of an 8 mass% aqueous solution of the polymer, the lower limit at a pH of 8.0 or higher can be set as 0% or more, can be set as 5% or more, or can be set as 10% or more, for example.

Moreover, the haze of an 8 mass% aqueous solution of the polymer at a pH of 8.0 or higher may be 20% or less, or may be 20% or more.

Note that the haze of the above-described specific aqueous solution of the polymer can be controlled through the chemical composition (proportional content of each type of repeating unit) and weight-average molecular weight of the polymer, conditions of the production method of the polymer, and so forth.

### [Iodine value]

The iodine value of the polymer is preferably 5 mg/100 mg or more, more preferably 7 mg/100 mg or more, and even more preferably 10 mg/100 mg or more, and is preferably 100 mg/100 mg or less, more preferably 80 mg/100 mg or less, and even more preferably 70 mg/100 mg or less. When the iodine value of the polymer is not less than any of the lower limits set forth above, dispersibility of a conductive material in a conductive material dispersion liquid that is produced using the binder composition can be further improved. On the other hand, when the iodine value of the polymer is not more than any of the upper limits set forth above, the amount of the polymer that adsorbs to a conductive material increases, dispersibility of a conductive material in a conductive material dispersion liquid that is produced using the binder composition can be further improved, and viscosity stability of the conductive material dispersion liquid can also be improved. Moreover, when the iodine value of the polymer is not more than any of the upper limits set forth above, adhesiveness of a positive electrode mixed material layer that is formed from a slurry composition produced using the conductive material dispersion liquid can be increased. Furthermore, when the iodine value of the polymer is not more than any of the upper limits set forth above, cycle characteristics and high-temperature storage characteristics of a secondary battery that includes the positive electrode mixed material layer can be improved.

Also, the iodine value of the polymer may be 50 mg/100 mg or less, may be 35 mg/100 mg or less, may be 25 mg/100 mg or less, may be 15 mg/100 mg or less, or may be 10 mg/100 mg or less.

Note that the iodine value of the polymer can be controlled based on the amount of hydrogenation catalyst that is used in hydrogenation of the polymer, for example.

### <Solvent>

Either of water or an organic solvent can be used without any specific limitations as a solvent that is contained in the binder composition. The organic solvent may be N-methylpyrrolidone (NMP), N,N-dimethylformamide, acetone, or the like, for example. From a viewpoint of increasing stability of the binder composition, it is preferable to use N-methylpyrrolidone (NMP) as the organic solvent. Note that one solvent may be used individually, or two or more solvents may be used as a mixture in a freely selected ratio.

### <Other components>

In addition to the components described above, the presently disclosed binder composition for a non-aqueous secondary battery positive electrode may contain components such as reinforcing materials, leveling agents, viscosity modifiers, and additives for electrolyte solution. These other components are not specifically limited so long as they do not affect battery reactions and may be selected from commonly known components such as those described in WO2012/115096A1. One of these components may be used individually, or two or more of these components may be used in combination in a freely selected ratio.

### <Production of binder composition for non-aqueous secondary battery positive electrode>

In a case in which the presently disclosed binder composition for a non-aqueous secondary battery positive electrode contains a solvent, the presently disclosed binder composition for a non-aqueous secondary battery positive electrode can be produced by dissolving or dispersing the above-described polymer in the solvent. Specifically, the binder composition for a non-aqueous secondary battery positive electrode can be produced by mixing the above-described components and the solvent using a mixer such as a ball mill, a sand mill, a bead mill, a pigment disperser, a grinding machine, an ultrasonic disperser, a homogenizer, a planetary mixer, or a FILMIX.

Note that in a case in which the polymer is produced in the form of a water dispersion, the water dispersion may be used in that form as the binder composition, or the water dispersion of the polymer may be mixed with an organic solvent and then water may be removed to obtain the binder composition.

### (Conductive material dispersion liquid for non-aqueous secondary battery positive electrode)

The presently disclosed conductive material dispersion liquid for a non-aqueous secondary battery positive electrode contains a conductive material including one or more carbon nanotubes, a dispersion medium, and the presently disclosed binder composition for a non-aqueous secondary battery positive electrode set forth above. The presently disclosed conductive material dispersion liquid has excellent conductive material dispersibility as a result of containing the presently disclosed binder composition for a non-aqueous secondary battery positive electrode set forth above.

### <Conductive material>

The presently disclosed conductive material dispersion liquid for a non-aqueous secondary battery positive electrode is required to contain one or more carbon nanotubes as the conductive material. The conductive material is a component that can be compounded in order to promote electrical contact among an electrode active material in an electrode mixed material layer. Examples of other conductive materials that can be used besides the carbon nanotubes include conductive carbon materials such as carbon black (for example, acetylene black, Ketjenblack^{®} (Ketjenblack is a registered trademark in Japan, other countries, or both), and furnace black), graphite, carbon fiber other than carbon nanotubes, and carbon flake; and fibers, foils, etc. of various metals.

One of these conductive materials can be used individually, or two or more of these conductive materials can be used in combination.

The BET specific surface area of the conductive material is preferably 100 m²/g or more, and more preferably 150 m²/g or more, and is normally 2,500 m²/g or less. When the BET specific surface area of the conductive material is not less than any of the lower limits set forth above, good interactions arise between the conductive material and the polymer that is contained in the presently disclosed binder composition, and high-temperature storage characteristics of an obtained secondary battery can be enhanced. This makes it possible to form good electrical conduction paths in an electrode mixed material layer and to improve output characteristics of a secondary battery. Moreover, when the BET specific surface area of the conductive material is not more than the upper limit set forth above, aggregation of the conductive material can be inhibited, and sufficiently high dispersibility of the conductive material can be ensured.

Note that carbon nanotubes generally have a high tendency to aggregate and are difficult to disperse. However, as a result of a binder composition that contains a polymer satisfying the specific chemical composition and property described above being used in the presently disclosed conductive material dispersion liquid, good and stable dispersion of carbon nanotubes is possible in the presently disclosed conductive material dispersion liquid.

### <Dispersion medium>

The dispersion medium can be water or an organic solvent such as previously described in the "Solvent" section. The amount of the dispersion medium can be set such that the solid content concentration of the conductive material dispersion liquid is, for example, 1 mass% or more, preferably 2 mass% or more, and more preferably 3 mass% or more, and is, for example, 30 mass% or less, preferably 25 mass% or less, and more preferably 20 mass% or less.

### <Other components>

Examples of other components that can be compounded in the conductive material dispersion liquid include the same other components as can be compounded in the presently disclosed binder composition, but are not specifically limited thereto. One other component may be used individually, or two or more other components may be used in combination in a freely selected ratio.

### <Value of D50 of carbon nanotubes in conductive material dispersion liquid>

The volume-average particle diameter D50 in a particle size distribution of dispersed particle diameter of the carbon nanotubes in the conductive material dispersion liquid is preferably 0.1 µm or more, and is preferably 5.0 µm or less, more preferably 4.0 µm or less, and even more preferably 2.0 µm or less. When the volume-average particle diameter D50 in a particle size distribution of dispersed particle diameter of the carbon nanotubes in the conductive material dispersion liquid is within any of the specific ranges set forth above, dispersibility of the conductive material (carbon nanotubes) in the conductive material dispersion liquid can be further improved.

### <Production method of conductive material dispersion liquid>

The conductive material dispersion liquid can be produced by mixing the presently disclosed binder composition set forth above, the conductive material, the dispersion medium, and other optional components. Note that in a case in which the binder composition contains a solvent, that solvent can be used as the dispersion medium. The mixing method is not specifically limited and may be any of the methods that were previously described in the "Production of binder composition for non-aqueous secondary battery positive electrode" section. With regard to the content ratio of the conductive material and the previously described specific polymer in the conductive material dispersion liquid, the polymer is preferably 10 parts by mass or more, and more preferably 15 parts by mass or more when the content of the conductive material is taken to be 100 parts by mass, and the polymer is preferably 100 parts by mass or less, more preferably 50 parts by mass or less, and even more preferably 30 parts by mass or less when the content of the conductive material is taken to be 100 parts by mass.

### (Slurry composition for non-aqueous secondary battery positive electrode)

The presently disclosed slurry composition for a non-aqueous secondary battery positive electrode contains a positive electrode active material and the presently disclosed conductive material dispersion liquid set forth above. In other words, the presently disclosed slurry composition for a non-aqueous secondary battery positive electrode contains a positive electrode active material, a polymer, one or more carbon nanotubes as a conductive material, and a solvent and may additionally further contain other optional components.

### <Conductive material dispersion liquid>

The presently disclosed conductive material dispersion liquid set forth above is used as the conductive material dispersion liquid.

### <Positive electrode active material>

The positive electrode active material is a material that gives and receives electrons in a positive electrode of a secondary battery. In the case of a positive electrode active material for a lithium ion secondary battery, for example, a material that can occlude and release lithium is normally used.

Although the following describes the positive electrode active material for a case in which the non-aqueous secondary battery is a lithium ion secondary battery as one example, the present disclosure is not limited to the following example.

Specifically, the positive electrode active material for a lithium ion secondary battery may be a known positive electrode active material such as lithium-containing cobalt oxide (LiCoO₂), lithium manganate (LiMn₂O₄), lithium-containing nickel oxide (LiNiO₂), a lithium-containing complex oxide of Co-Ni-Mn, a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a lithium-rich spinel compound represented by Li₁₊ₓMn₂₋ₓO₄ (0 < x < 2), Li[Ni_{0.17}Li_{0.2}Co_{0.07}Mn_{0.56}]O₂, or LiNi_{0.5}Mn_{1.5}O₄ without any specific limitations. Note that the lithium-containing complex oxide of Co-Ni-Mn may be Li(Ni_{0.6}Co_{0.2}Mn_{0.2})O₂, Li(Ni_{0.5}Co_{0.2}Mn_{0.3})O₂, Li(Ni_{1/3}Co_{1/3}Mn_{1/3})O₂, or the like.

Of the examples described above, lithium-containing cobalt oxide (LiCoO₂), lithium-containing nickel oxide, (LiNiO₂), a lithium-containing complex oxide of Co-Ni-Mn, Li[Ni_{0.17}Li_{0.2}Co_{0.07}Mn_{0.56}]O₂, or LiNi_{0.5}Mn_{1.5}O₄ is preferably used as the positive electrode active material from a viewpoint of improving battery capacity of a secondary battery, for example, and a lithium-containing complex oxide of Co-Ni-Mn is more preferably used as the positive electrode active material.

The amount and particle diameter of the positive electrode active material are not specifically limited and can be set as the same as those of a conventionally used positive electrode active material.

### <Content ratio>

The content ratio of the conductive material in the slurry composition is preferably not less than 0.01 parts by mass and not more than 20 parts by mass when the content of the positive electrode active material is taken to be 100 parts by mass. When the ratio of the conductive material is not less than the lower limit set forth above, electrical contact among the positive electrode active material can be promoted. Moreover, when the amount of the conductive material is not more than the upper limit set forth above, coatability of the slurry composition can be increased.

Furthermore, the preferred content ratio of the polymer in the slurry composition can be within a preferred range that can be derived from the preferred content ratio range for the polymer relative to the conductive material that was previously described in the "Production method of conductive material dispersion liquid" section and the content ratio of the positive electrode active material and the conductive material that was described at the beginning of this paragraph.

### <Other components>

Examples of other components that can be compounded in the slurry composition include the same components as other components that can be compounded in the presently disclosed binder composition, but are not specifically limited thereto. One other component may be used individually, or two or more other components may be used in combination in a freely selected ratio. In particular, it is preferable to use a fluorine-containing polymer such as polyvinylidene fluoride (PVdF) as a binder in addition to the previously described polymer in a case in which the slurry composition for a secondary battery positive electrode is a slurry composition for a lithium ion secondary battery positive electrode. In a case in which the slurry composition contains one or a plurality of binders in addition to the previously described polymer, the proportion constituted by the previously described polymer can be not less than 5 parts by mass and not more than 50 parts by mass when the total content of the one or plurality of binders is taken to be 100 parts by mass. When the proportional content of the previously described polymer in the slurry composition is not less than the lower limit set forth above, high-temperature storage characteristics of an obtained secondary battery can be enhanced. Moreover, when the proportional content of the previously described polymer is not more than the upper limit set forth above, adhesiveness of a positive electrode mixed material layer can be increased.

### <Production method of slurry composition>

The slurry composition set forth above can be produced by dissolving or dispersing the above-described components in a solvent such as water or an organic solvent. For example, the presently disclosed slurry composition is preferably produced by performing a step of adding the positive electrode active material, the solvent, optional components, etc. to the conductive material dispersion liquid set forth above and performing mixing thereof by a known method such as previously described.

### (Positive electrode for non-aqueous secondary battery)

The presently disclosed positive electrode for a non-aqueous secondary battery includes a positive electrode mixed material layer formed using the presently disclosed slurry composition for a non-aqueous secondary battery positive electrode. More specifically, the presently disclosed positive electrode includes a positive electrode mixed material layer formed using the presently disclosed slurry composition on a current collector. In other words, the positive electrode mixed material layer contains at least an electrode active material, a polymer, and one or more carbon nanotubes as a conductive material. It should be noted that components contained in the positive electrode mixed material layer are components that were contained in the slurry composition set forth above and that the preferred ratio of these components is the same as the preferred ratio of the components in the slurry composition.

By using the presently disclosed positive electrode for a non-aqueous secondary battery, it is possible to form a secondary battery that has excellent battery characteristics such as cycle characteristics and high-temperature storage characteristics, for example.

### <Production method of positive electrode for non-aqueous secondary battery>

The presently disclosed positive electrode for a non-aqueous secondary battery may be produced, for example, through a step of applying the slurry composition set forth above onto the current collector (application step) and a step of drying the slurry composition that has been applied onto the current collector to form a positive electrode mixed material layer on the current collector (drying step).

Note that the presently disclosed positive electrode for a non-aqueous secondary battery can alternatively be produced by a method in which composite particles are prepared through dry granulation of the slurry composition set forth above and then these composite particles are used to form a positive electrode mixed material layer on the current collector.

### [Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. The slurry composition for a non-aqueous secondary battery positive electrode may be applied onto one side or both sides of the current collector. The thickness of the slurry coating on the current collector after application but before drying may be set as appropriate in accordance with the thickness of the positive electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. Of these materials, aluminum foil is particularly preferable as a current collector used for a positive electrode. One of these materials may be used individually, or two or more of these materials may be used in combination in a freely selected ratio.

### [Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, a positive electrode mixed material layer can be formed on the current collector to thereby obtain a positive electrode for a non-aqueous secondary battery that includes the current collector and the positive electrode mixed material layer.

Moreover, in the production method of the presently disclosed positive electrode for a non-aqueous secondary battery, the positive electrode mixed material layer may be subjected to a pressing process by mold pressing, roll pressing, or the like after the drying step. This pressing process can improve close adherence of the positive electrode mixed material layer and the current collector.

Furthermore, when the positive electrode mixed material layer contains a curable polymer, the polymer is preferably cured after the positive electrode mixed material layer has been formed.

### (Non-aqueous secondary battery)

The presently disclosed non-aqueous secondary battery includes a positive electrode, a negative electrode, an electrolyte solution, and a separator, wherein the presently disclosed positive electrode for a non-aqueous secondary battery is used as the positive electrode. The presently disclosed non-aqueous secondary battery has excellent battery characteristics such as cycle characteristics and high-temperature storage characteristics, for example, as a result of including the presently disclosed positive electrode for a non-aqueous secondary battery.

Although the following describes a case in which the non-aqueous secondary battery is a lithium ion secondary battery as one example, the present disclosure is not limited to the following example.

### <Negative electrode>

Any known negative electrode can be used as the negative electrode. Specifically, the negative electrode may, for example, be a negative electrode formed of a thin sheet of lithium metal or a negative electrode obtained by forming a negative electrode mixed material layer on a current collector.

The current collector may be made of a metal material such as iron, copper, aluminum, nickel, stainless steel, titanium, tantalum, gold, or platinum. The negative electrode mixed material layer may be a layer that contains a negative electrode active material and a binder. The binder is not specifically limited and may be freely selected from known materials.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. The concentration of the electrolyte in the electrolyte solution can be adjusted as appropriate.

### <Separator>

Examples of separators that can be used include, but are not specifically limited to, those described in JP2012-204303A. Of these separators, a microporous membrane made of polyolefinic (polyethylene, polypropylene, or polybutene) resin is preferred since such a membrane can reduce the total thickness of the separator, which increases the ratio of electrode active material in the secondary battery, and consequently increases the volumetric capacity. Moreover, an adhesive layer-equipped separator having a layer that displays adhesiveness (i.e., an adhesive layer) formed at the surface of the aforementioned microporous membrane or a heat-resistant layer-equipped separator having a layer that displays heat resistance (i.e., a heat-resistant layer) formed at the surface of the aforementioned microporous membrane may be used as the separator.

### <Production method of secondary battery>

The presently disclosed secondary battery may be produced, for example, by stacking the positive electrode and the negative electrode with the separator in-between, performing rolling, folding, or the like of the resultant laminate in accordance with the battery shape as necessary to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. Furthermore, in the case of a polymer that is a hydrogenated polymer obtained through hydrogenation of a polymerized product including conjugated diene monomer units, the total proportional content of non-hydrogenated conjugated diene monomer units and alkylene structural units that are hydrogenated conjugated diene monomer units in the hydrogenated polymer is the same as the ratio (charging ratio) of a conjugated diene monomer among all monomers used in polymerization of the polymerized product.

In the examples and comparative examples, various measurements and evaluations were carried out by the following methods.

### <Weight-average molecular weight of polymer>

The weight-average molecular weight (Mw) of a polymer was measured by gel permeation chromatography (GPC) under the following measurement conditions using LiBr-DMF solution of 10 mM in concentration.
- Separation column: Shodex KD-806M (produced by Showa Denko K.K.)
- Detector: Differential refractive index detector RID-10A (produced by Shimadzu Corporation)
- Flow rate of eluent: 0.3 mL/min
- Column temperature: 40°C
- Standard polymer: TSK standard polystyrene (produced by Tosoh Corporation)

### <Haze of 8 mass% aqueous solution of polymer>

Water was further added to a water dispersion of a polymer obtained in each example or comparative example so as to obtain an aqueous solution having a polymer concentration of 8 mass%. The pH of the obtained 8 mass% aqueous solution of the polymer was measured and was confirmed to be pH 9.5.

Haze measurement was performed under a condition of 25°C using a haze meter (product name: NDH7000SP; produced by Nippon Denshoku Industries Co., Ltd.; device in accordance with JIS K 7136:2000) by first performing standard calibration with water loaded into a glass cell for liquid measurement and subsequently loading the 8 mass% aqueous solution (pH 9.5) of the polymer obtained as described above into the glass cell to perform haze measurement.

### <Iodine value of polymer>

After coagulating 100 g of a water dispersion of a polymer produced in each example or comparative example in 1 L of methanol, 12 hours of vacuum drying was performed at a temperature of 60°C. The iodine value of the obtained dry polymer was then measured according to JIS K6235(2006).

### <Volume-average particle diameter D50 in particle size distribution of dispersed particle diameter of carbon nanotubes in conductive material dispersion liquid>

A conductive material dispersion liquid produced in each example or comparative example was used to measure the average particle diameter D50 by volume of carbon nanotubes in the conductive material dispersion liquid through a dry cumulative particle diameter distribution obtained using a laser diffraction/scattering particle size analyzer (Microtrac MT3200II produced by Nikkiso Co., Ltd.) with a dispersing air pressure of 0.02 MPa during measurement.

### <Dispersibility of conductive material in conductive material dispersion liquid>

The viscosity of a conductive material dispersion liquid produced in each example or comparative example was measured by a rheometer (MCR 302 produced by Anton Paar) under conditions of a temperature of 25°C and a shear rate of 2.5 s⁻¹ and was evaluated by the following standard. Note that a lower conductive material dispersion liquid viscosity at the same solid content concentration indicates better dispersibility of a conductive material such as carbon nanotubes in the conductive material dispersion liquid.
A: Viscosity of less than 1,000 mPa·s
B: Viscosity of not less than 1,000 mPa·s and less than 3,000 mPa·s
C: Viscosity of not less than 3,000 mPa·s and less than 10,000 mPa·s
D: Viscosity of 10,000 mPa·s or more

### <Adsorbed amount of polymer to conductive material>

A conductive material paste for adsorbed amount measurement having a solid content concentration of 10 mass% was produced by adding 4.0 parts (in terms of solid content) of a polymer NMP solution as a binder composition produced in each example or comparative example, 4.0 parts of carbon nanotubes (specific surface area: 280 m²/g) as a conductive material, and an appropriate amount of NMP to a disper blade and subsequently performing stirring thereof (3,000 rpm, 60 minutes). The conductive material paste for adsorbed amount measurement was adjusted to a solid content concentration of 1 mass% through addition of NMP to obtain a diluted liquid.

This diluted liquid was subjected to 10 minutes of centrifugal separation at a rotation speed of 10,000 rpm using a centrifuge. The resultant sediment was dried at 150°C for 3 hours in a vacuum dryer to obtain a dried product. At this time, it was confirmed that change of mass due to drying no longer occurred.

This dried product was subjected to heat treatment up to 500°C at a heating rate of 10°C/min in a nitrogen atmosphere using a thermo-balance. The adsorbed amount of a polymer to a conductive material was calculated by the following formula from the mass W1 (g) of the dried product before heat treatment and the mass W2 (g) of a residue obtained after heat treatment, which were measured by the thermo-balance.

Formula: Adsorbed amount of binder (mg/g) = {(W1 - W2) × 1,000}/W2
A: Not less than 110 mg/g and not more than 1,000 mg/g
B: Not less than 80 mg/g and less than 110 mg/g
C: Not less than 60 mg/g and less than 80 mg/g
D: Not less than 40 mg/g and less than 60 mg/g

### <Viscosity stability of conductive material dispersion liquid>

The following operation was performed in order to determine the rate of viscosity change of a conductive material dispersion liquid produced in each example or comparative example. Specifically, the viscosity of the conductive material dispersion liquid straight after production was measured using a rheometer (MCR 302 produced by Anton Paar) under conditions of a temperature of 25°C and a shear rate of 2.5 s⁻¹, and the obtained viscosity was taken to be η0. Next, the conductive material dispersion liquid was left at 25°C for 1 week (168 hours) in a hermetically sealed state. Thereafter, the viscosity of the conductive material dispersion liquid after being left for 1 week was measured under the same conditions as before being left for 1 week, and the obtained viscosity was taken to be η1. The rate of viscosity change Δη was calculated from η0 and η1 (Δη = (η1/η0) × 100[%]). A rate of viscosity change that is closer to 100% indicates that the conductive material dispersion liquid has higher viscosity stability and that dispersibility of a conductive material (carbon nanotubes) after storage of the conductive material dispersion liquid is higher. Consequently, good electrical conduction paths can be formed in a positive electrode mixed material layer, thereby enabling reduction of a battery resistance value.
A: Viscosity maintenance rate Δη of not less than 90% and not more than 110%
B: Viscosity maintenance rate Δη of not less than 80% and less than 90%
C: Viscosity maintenance rate Δη of not less than 70% and less than 80%
D: Viscosity maintenance rate Δη of less than 70% or more than 110%

### <Cycle characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C, and was then subjected to 12 hours of aging at a temperature of 60°C. The lithium ion secondary battery was then discharged to a cell voltage of 3.00 V by a 0.2C constant-current method at a temperature of 25°C. Thereafter, CC-CV charging (upper limit cell voltage 4.20 V) was performed by a 0.2C constant-current method and CC discharging was performed to 3.00 V by a 0.2C constant-current method. This charging and discharging at 0.2C was repeated three times.

Next, the lithium ion secondary battery was subjected to 100 cycles of a charge/discharge operation with a cell voltage of 4.20 V to 3.00 V and a charge/discharge rate of 1.0C in an environment having a temperature of 45°C. The discharge capacity of the 1^{st} cycle was defined as X1, and the discharge capacity of the 100^{th} cycle was defined as X2. The discharge capacity X1 and the discharge capacity X2 were used to calculate a capacity maintenance rate indicated by ΔC = (X2/X1) × 100(%), which was then evaluated by the following standard. A larger value for this capacity maintenance rate ΔC indicates that the lithium ion secondary battery has better cycle characteristics.
A: Capacity maintenance rate of 95% or more
B: Capacity maintenance rate of not less than 90% and less than 95%
C: Capacity maintenance rate of not less than 85% and less than 90%
D: Capacity maintenance rate of less than 90%

### <High-temperature storage characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C, and was then subjected to 12 hours of aging at a temperature of 60°C. The lithium ion secondary battery was then discharged to a cell voltage of 3.00 V by a 0.2C constant-current method at a temperature of 25°C. Thereafter, CC-CV charging (upper limit cell voltage 4.20 V) was performed with a 0.2C constant current and then CC discharging was performed to a cell voltage of 3.00 V with a 0.2C constant current. This charging and discharging at 0.2C was repeated three times. The discharge capacity of the 3^{rd} cycle at 0.2C was defined as the initial capacity CX. Thereafter, CC-CV charging (upper limit cell voltage 4.20 V) was performed with a 0.2C constant current. Next, the lithium ion secondary battery was stored for 4 weeks inside an inert oven having a 60°C nitrogen atmosphere set inside of a treatment chamber. Thereafter, the lithium ion secondary battery was discharged to a cell voltage of 3.00 V by a 0.2C constant-current method, and the discharge capacity at this time was defined as CY. A high-temperature capacity maintenance rate indicated by (CY/CX) × 100(%) was determined and was evaluated by the following standard. A larger high-temperature capacity maintenance rate indicates less degradation of the lithium ion secondary battery during high-temperature storage (i.e., better high-temperature storage characteristics).
A: High-temperature capacity maintenance rate of 90% or more
B: High-temperature capacity maintenance rate of not less than 85% and less than 90%
C: High-temperature capacity maintenance rate of not less than 80% and less than 85%
D: High-temperature capacity maintenance rate of less than 80%

### <Adhesiveness of positive electrode mixed material layer>

A positive electrode and an adhesive layer-equipped separator produced in each example or comparative example were each cut out as 10 mm in width and 50 mm in length. The positive electrode and the adhesive layer-equipped separator were stacked and were pressed by roll pressing under conditions of a temperature of 70°C, a load of 5 kN/m, and a pressing rate of 30 m/min so as to join the positive electrode and the adhesive layer-equipped separator to obtain a joined product. Note that in the operation described above, the adhesive layer-equipped separator was arranged such that a surface at a side where an adhesive layer had been further formed on a heat-resistant layer was facing toward the positive electrode.

The resultant joined product was placed with the surface at the current collector-side of the positive electrode facing downward, and cellophane tape was affixed to the surface of the positive electrode. Tape prescribed by JIS Z1522 was used as the cellophane tape. Moreover, the cellophane tape was fixed to a horizontal test stage in advance. Thereafter, one end of the adhesive layer-equipped separator was pulled vertically upward at a pulling speed of 50 mm/min to cause peeling thereof, and the stress during peeling was measured.

The measurement of stress described above was performed three times for a joined product of a positive electrode and an adhesive layer-equipped separator, an average value of the stress was determined, and the obtained average value was taken to be the peel strength (N/m).

The calculated peel strength was used to evaluate adhesiveness of the positive electrode mixed material layer by the following standard. A larger peel strength indicates better adhesion between the positive electrode and the adhesive layer-equipped separator, and thus indicates that the positive electrode mixed material layer has better adhesiveness.
A: Peel strength of 10 N/m or more
B: Peel strength of not less than 6 N/m and less than 10 N/m
C: Peel strength of not less than 3 N/m and less than 6 N/m
D: Peel strength of less than 3 N/m

### (Example 1)

### <Production of polymer (binder composition)>

A reactor was charged, in order, with 200 parts of deionized water, 25 parts of sodium dodecylbenzenesulfonate aqueous solution of 10% in concentration, 30 parts of acrylonitrile as a nitrile group-containing monomer, 10 parts of methacrylic acid as a hydrophilic group-containing monomer, and 2.50 parts of t-dodecyl mercaptan as a chain transfer agent. Next, gas inside of the reactor was purged three times with nitrogen, and then 60 parts of 1,3-butadiene as a conjugated diene monomer was added into the reactor. The reactor was held at 10°C while adding 0.03 parts of cumene hydroperoxide as a polymerization initiator and appropriate amounts of a reductant and a chelating agent and was stirred while continuing a polymerization reaction. At the point at which the polymerization conversion rate reached 80%, 0.1 parts of hydroquinone aqueous solution of 10% in concentration was added as a polymerization inhibitor to stop the polymerization reaction. Next, residual monomer was removed at a water temperature of 80°C to yield a water dispersion of a precursor of a polymer.

The obtained water dispersion of the polymer precursor and a palladium catalyst (solution obtained by mixing 1% palladium acetate acetone solution with an equal weight of deionized water) were added into an autoclave such that the palladium content was 3,000 ppm relative to the weight of solid content contained in the water dispersion, and a hydrogenation reaction was performed at a hydrogen pressure of 3 MPa and a temperature of 55°C for 3 hours to yield a water dispersion of a target polymer (hydrogenated nitrile rubber).

Thereafter, the contents were restored to normal temperature, the system was converted to a nitrogen atmosphere, and then concentrating was performed to a solid content concentration of 40% using an evaporator.

Next, 2.5% KOH aqueous solution was added to the concentrated water dispersion of the polymer so as to adjust the pH to 9.5. The pH adjusted water dispersion of the polymer was used to measure the haze and iodine value.

Next, 200 parts of N-methylpyrrolidone was added to 100 parts of the pH adjusted water dispersion of the polymer, water and residual monomer were completely evaporated under reduced pressure, and then N-methylpyrrolidone was evaporated to obtain an 8 mass% NMP solution of the polymer as a binder composition. The obtained binder composition was used to measure and evaluate the weight-average molecular weight of the polymer and the adsorbed amount of the polymer to a conductive material.

### <Production of conductive material dispersion liquid for positive electrode>

A conductive material dispersion liquid having a solid content concentration of 5.0 mass% was produced by using a disper blade to stir (3,000 rpm, 10 minutes) 4.0 parts of carbon nanotubes (specific surface area: 280 m²/g) as a conductive material, 1.0 parts (in terms of solid content) of the binder composition obtained as described above, and NMP in an amount such as to be 100 parts in total with the amount of NMP contained in the binder composition, and subsequently using a bead mill in which zirconia beads of 1 mm in diameter were used to mix these materials at a circumferential speed of 8 m/s for 1 hour. The obtained conductive material dispersion liquid was used to evaluate the volume-average particle diameter D50 in a particle size distribution of dispersed particle diameter of the carbon nanotubes in the conductive material dispersion liquid, dispersibility of the conductive material in the conductive material dispersion liquid, and viscosity stability of the conductive material dispersion liquid.

### <Production of slurry composition for positive electrode>

A slurry composition for a positive electrode was produced by adding together 98.0 parts of a ternary active material having a layered structure (LiNi_{0.6}Co_{0.2}Mn_{0.2}O₂; average particle diameter: 10 µm) as a positive electrode active material, 1.0 parts of polyvinylidene fluoride as a binder, 1.0 parts (in terms of solid content) of the conductive material dispersion liquid obtained as described above, and NMP and mixing these materials in a planetary mixer (60 rpm, 30 minutes). Note that the additive amount of NMP was adjusted such that the viscosity of the obtained slurry composition for a positive electrode (measured by single-cylinder rotational viscometer in accordance with JIS Z8803:1991; temperature: 25°C; rotation speed: 60 rpm) was within a range of 4,000 mPa·s to 5,000 mPa·s.

### <Production of positive electrode>

Aluminum foil of 20 µm in thickness was prepared as a current collector. The slurry for a positive electrode obtained as described above was applied onto one side of the aluminum foil by a comma coater such as to have a mass per unit area after drying of 20 mg/cm², was dried at 90°C for 20 minutes and at 120°C for 20 minutes, and was subsequently heat treated at 60°C for 10 hours to obtain a positive electrode web. This positive electrode web was rolled by roll pressing to produce a sheet-shaped positive electrode including the aluminum foil and a positive electrode mixed material layer of 3.2 g/cm³ in density. The sheet-shaped positive electrode was cut to 48.0 mm in width and 47 cm in length to obtain a positive electrode for a lithium ion secondary battery.

### <Production of negative electrode>

A 5 MPa pressure-resistant vessel equipped with a stirrer was charged with 33 parts of 1,3-butadiene as an aliphatic conjugated diene monomer, 3.5 parts of itaconic acid as a carboxy group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the polymerization reaction to yield a mixture containing a particulate binder (styrene-butadiene copolymer). The mixture was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing a binder for a negative electrode.

A planetary mixer was charged with 48.75 parts of artificial graphite and 48.75 parts of natural graphite as negative electrode active materials and 1 part (in terms of solid content) of carboxymethyl cellulose as a thickener. These materials were diluted to a solid content concentration of 60% with deionized water and were subsequently kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. The viscosity was then adjusted to 3000 ± 500 mPa·s (measured by B-type viscometer at 25°C and 60 rpm) through addition of deionized water to produce a slurry composition for a negative electrode.

The slurry composition for a negative electrode was applied onto the surface of copper foil of 15 µm in thickness serving as a current collector by a comma coater such as to have a coating weight of 10 ± 0.5 mg/cm². Thereafter, the copper foil with the slurry composition for a negative electrode applied thereon was conveyed inside an oven having a temperature of 80°C for 2 minutes and an oven having a temperature of 110°C for 2 minutes at a speed of 400 mm/min so as to dry the slurry composition on the copper foil and obtain a negative electrode web having a negative electrode mixed material layer formed on the current collector.

This negative electrode web was rolled by roll pressing to produce a sheet-shaped negative electrode including the aluminum foil and a negative electrode mixed material layer of 1.6 g/cm³ in density. The sheet-shaped negative electrode was cut to 50.0 mm in width and 52 cm in length to obtain a negative electrode for a lithium ion secondary battery.

### <Production of adhesive layer-equipped separator>

### <<Production of water dispersion containing adhesive polymer B1>>

A reactor including a stirrer was supplied with 100 parts of deionized water and 0.5 parts of ammonium persulfate. The gas phase of the reactor was purged with nitrogen gas and the temperature was raised to 70°C. Meanwhile, a monomer composition for core portion formation was obtained in a separate vessel by mixing 40 parts of deionized water, 0.3 parts of sodium dodecylbenzenesulfonate as an emulsifier, 24.5 parts of n-butyl acrylate and 28 parts of methyl methacrylate as (meth)acrylic acid ester monomers, 14 parts of acrylonitrile as a nitrile group-containing monomer, 2.8 parts of methacrylic acid (MAA) as an acid group-containing monomer, and 0.7 parts of ethylene glycol dimethacrylate (EDMA) as a cross-linkable monomer. The monomer composition was continuously added to the reactor over 3 hours to perform a polymerization reaction at 70°C. Polymerization was continued until a polymerization conversion rate of 96% was reached to yield a water dispersion containing a particulate polymer forming a core portion. Next, the water dispersion was heated to 75°C, and then 1.7 parts of acrylonitrile as a nitrile group-containing monomer, 0.3 parts of methacrylic acid (MAA) as an acid group-containing monomer, and 28.0 parts of styrene (ST) as an aromatic-containing monomer were mixed and were continuously added to the water dispersion so as to continue polymerization. At the point at which the polymerization conversion rate reached 96%, cooling was performed to quench the reaction to yield a water dispersion containing an adhesive polymer B1. The obtained adhesive polymer B1 had a core-shell structure in which the outer surface of a core portion was partially covered by a shell portion.

### <<Production of water dispersion containing adhesive polymer B2>>

A reactor including a stirrer was supplied with 70 parts of deionized water, 0.2 parts of sodium dodecylbenzenesulfonate as an emulsifier, and 0.5 parts of ammonium persulfate. The gas phase of the reactor was purged with nitrogen gas and the temperature was raised to 75°C.

Meanwhile, a monomer composition was obtained in a separate vessel by mixing 50 parts of deionized water, 0.8 parts of sodium dodecylbenzenesulfonate as a dispersant, 71.3 parts of 2-ethylhexyl acrylate (2EHA) as a (meth)acrylic acid ester monomer, 3.0 parts of acrylic acid (AA) as an acid group-containing monomer, 1.7 parts of allyl glycidyl ether as an epoxy group-containing monomer, 26 parts of styrene (ST) as an aromatic-containing monomer, and 0.2 parts of allyl methacrylate (AMA) as a cross-linkable monomer. The monomer composition was continuously added to the reactor over 4 hours to perform polymerization. During addition, the reaction was performed at 75°C. Once the addition was complete, a further 3 hours of stirring was performed at 80°C, and then the reaction was ended to yield a water dispersion containing an adhesive polymer B2.

### <<Production of slurry composition for adhesive layer>>

A slurry composition for an adhesive layer (solid content concentration: 10%) was obtained in the form of a slurry through mixing of 100 parts (in terms of solid content) of the water dispersion of the adhesive polymer B1, 15 parts (in terms of solid content) of the water dispersion of the adhesive polymer B2, and deionized water.

### <<Formation of adhesive layer>>

A separator substrate made of polyethylene (produced by Asahi Kasei Corporation; product name: ND412; thickness: 12 µm) was prepared. A ceramic slurry (BM-2000M produced by Zeon Corporation) was applied onto the surface of the prepared separator substrate and was dried at a temperature of 50°C for 3 minutes to obtain a separator including a heat-resistant layer at one side (heat-resistant layer thickness: 2 µm). Next, the slurry composition for an adhesive layer obtained as described above was applied onto one side of the separator including the heat-resistant layer and was dried at a temperature of 50°C for 3 minutes. The same operation was also performed with respect to the other side of the separator substrate to obtain an adhesive layer-equipped separator having adhesive layers formed at both sides. The mass per unit area after drying of the adhesive layers formed at both sides was 0.25 g/m².

The sheet-shaped positive electrode obtained as previously described and the adhesive layer-equipped separator were used to evaluate adhesiveness of the positive electrode mixed material layer. The result is shown in Table 1.

### <Production of lithium ion secondary battery>

The produced positive electrode for a lithium ion secondary battery and negative electrode for a lithium ion secondary battery were wound up with the respective electrode mixed material layers thereof facing each other and with the adhesive layer-equipped separator produced as described above interposed therebetween using a core of 20 mm in diameter to obtain a roll. Note that in the operation described above, the adhesive layer-equipped separator was arranged such that the surface at the side where an adhesive layer had been further formed on a heat-resistant layer faced toward the positive electrode. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

In addition, a LiPF₆ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) was prepared as an electrolyte solution.

Thereafter, the compressed roll was housed inside of a laminate case made of aluminum together with 3.2 g of the electrolyte solution. After connecting a nickel lead to a specific position on the negative electrode for a secondary battery and connecting an aluminum lead to a specific position on the positive electrode for a secondary battery, an opening of the case was thermally sealed to obtain a lithium ion secondary battery as the presently disclosed a non-aqueous secondary battery. This lithium ion secondary battery had a pouch shape of 35 mm in width, 60 mm in height, and 5 mm in thickness. The nominal capacity of the battery was 700 mAh.

Cycle characteristics and high-temperature storage characteristics were evaluated for the obtained lithium ion secondary battery. The results are shown in Table 1.

### (Examples 2 to 5)

Production of a polymer (binder composition), production of a conductive material dispersion liquid for a positive electrode, production of a slurry composition for a positive electrode, production of a positive electrode, production of a negative electrode, production of an adhesive layer-equipped separator, and production of a lithium ion secondary battery were performed and various measurements and evaluations were carried out in the same way as in Example 1 with the exception that in production of the polymer (binder composition) in Example 1, the additive amounts of acrylonitrile as a nitrile group-containing monomer, methacrylic acid as a hydrophilic group-containing monomer, and 1,3-butadiene as a conjugated diene monomer were changed such that the chemical composition of the obtained polymer was as indicated in Table 1. The results are shown in Table 1.

### (Example 6)

Production of a polymer (binder composition), production of a conductive material dispersion liquid for a positive electrode, production of a slurry composition for a positive electrode, production of a positive electrode, production of a negative electrode, production of an adhesive layer-equipped separator, and production of a lithium ion secondary battery were performed and various measurements and evaluations were carried out in the same way as in Example 1 with the exception that in production of the polymer (binder composition) in Example 1, the additive amount of t-dodecyl mercaptan as a chain transfer agent was changed from 2.50 parts to 0.4 parts. The results are shown in Table 1.

### (Example 7)

Production of a polymer (binder composition), production of a conductive material dispersion liquid for a positive electrode, production of a slurry composition for a positive electrode, production of a positive electrode, production of a negative electrode, production of an adhesive layer-equipped separator, and production of a lithium ion secondary battery were performed and various measurements and evaluations were carried out in the same way as in Example 1 with the exception that in production of the polymer (binder composition) in Example 1, the additive amount of the palladium catalyst was adjusted to change the palladium content relative to the weight of solid content contained in the water dispersion of the polymer precursor from 3,000 ppm to 1,500 ppm. The results are shown in Table 1.

### (Example 8)

Production of a polymer (binder composition), production of a conductive material dispersion liquid for a positive electrode, production of a slurry composition for a positive electrode, production of a positive electrode, production of a negative electrode, production of an adhesive layer-equipped separator, and production of a lithium ion secondary battery were performed and various measurements and evaluations were carried out in the same way as in Example 1 with the exception that in production of the polymer (binder composition) in Example 1, the additive amount of acrylonitrile as a nitrile group-containing monomer was changed from 30 parts to 25 parts, the additive amount of 1,3-butadiene as a conjugated diene monomer was changed from 60 parts to 55 parts, and 10 parts of methyl methacrylate as a (meth)acrylic acid ester monomer was further added. The results are shown in Table 1.

### (Example 9)

Production of a polymer (binder composition), production of a conductive material dispersion liquid for a positive electrode, production of a slurry composition for a positive electrode, production of a positive electrode, production of a negative electrode, production of an adhesive layer-equipped separator, and production of a lithium ion secondary battery were performed and various measurements and evaluations were carried out in the same way as in Example 1 with the exception that in production of the polymer (binder composition) in Example 1, the additive amount of acrylonitrile as a nitrile group-containing monomer was changed from 30 parts to 25 parts, the additive amount of 1,3-butadiene as a conjugated diene monomer was changed from 60 parts to 55 parts, and 10 parts of styrene as an aromatic vinyl monomer was further added. The results are shown in Table 1.

### (Example 10)

Production of a polymer (binder composition), production of a conductive material dispersion liquid for a positive electrode, production of a slurry composition for a positive electrode, production of a positive electrode, production of a negative electrode, production of an adhesive layer-equipped separator, and production of a lithium ion secondary battery were performed and various measurements and evaluations were carried out in the same way as in Example 2 with the exception that in production of the polymer (binder composition) in Example 2, 200 parts of water instead of 200 parts of N-methylpyrrolidone was added relative to 100 parts of the water dispersion of the polymer after pH adjustment, residual monomer was completely evaporated under reduced pressure, and water was subsequently evaporated to obtain an 8 mass% aqueous solution of the polymer as a binder composition. The results are shown in Table 1.

### (Example 11)

Production of a polymer (binder composition), production of a conductive material dispersion liquid for a positive electrode, production of a slurry composition for a positive electrode, production of a positive electrode, production of a negative electrode, production of an adhesive layer-equipped separator, and production of a lithium ion secondary battery were performed and various measurements and evaluations were carried out in the same way as in Example 3 with the exception that in production of the polymer (binder composition) in Example 3, 200 parts of water instead of 200 parts of N-methylpyrrolidone was added relative to 100 parts of the water dispersion of the polymer after pH adjustment, residual monomer was completely evaporated under reduced pressure, and water was subsequently evaporated to obtain an 8 mass% aqueous solution of the polymer as a binder composition. The results are shown in Table 1.

### (Comparative Example 1)

Production of a polymer (binder composition), production of a conductive material dispersion liquid for a positive electrode, production of a slurry composition for a positive electrode, production of a positive electrode, production of a negative electrode, production of an adhesive layer-equipped separator, and production of a lithium ion secondary battery were performed and various measurements and evaluations were carried out in the same way as in Example 1 with the exception that in production of the polymer (binder composition) in Example 1, the additive amount of acrylonitrile as a nitrile group-containing monomer was changed from 30 parts to 35 parts, the additive amount of methacrylic acid as a hydrophilic group-containing monomer was changed from 10 parts to 5 parts, the additive amount of t-dodecyl mercaptan as a chain transfer agent was changed from 2.50 parts to 1.20 parts, and the additive amount of the palladium catalyst was adjusted to change the palladium content relative to the weight of solid content contained in the water dispersion of the polymer precursor from 3,000 ppm to 800 ppm. The results are shown in Table 1.

### (Comparative Example 2)

Production of a polymer (binder composition), production of a conductive material dispersion liquid for a positive electrode, production of a slurry composition for a positive electrode, production of a positive electrode, production of a negative electrode, production of an adhesive layer-equipped separator, and production of a lithium ion secondary battery were performed and various measurements and evaluations were carried out in the same way as in Example 1 with the exception that in production of the polymer (binder composition) in Example 1, the additive amount of acrylonitrile as a nitrile group-containing monomer was changed from 30 parts to 35 parts, the additive amount of 1,3-butadiene as a conjugated diene monomer was changed from 60 parts to 65 parts, methacrylic acid was not added as a hydrophilic group-containing monomer, the additive amount of t-dodecyl mercaptan as a chain transfer agent was changed from 2.50 parts to 1.80 parts, and the additive amount of the palladium catalyst was adjusted to change the palladium content relative to the weight of solid content contained in the water dispersion of the polymer precursor from 3,000 ppm to 500 ppm. The results are shown in Table 1.

### (Comparative Example 3)

Production of a polymer (binder composition), production of a conductive material dispersion liquid for a positive electrode, production of a slurry composition for a positive electrode, production of a positive electrode, production of a negative electrode, production of an adhesive layer-equipped separator, and production of a lithium ion secondary battery were performed and various measurements and evaluations were carried out in the same way as in Example 1 with the exception that in production of the polymer (binder composition) in Example 1, the additive amount of t-dodecyl mercaptan as a chain transfer agent was changed from 2.50 parts to 0.20 parts and the additive amount of the palladium catalyst was adjusted to change the palladium content relative to the weight of solid content contained in the water dispersion of the polymer precursor from 3,000 ppm to 1,000 ppm. The results are shown in Table 1.

### (Comparative Example 4)

Production of a polymer (binder composition), production of a conductive material dispersion liquid for a positive electrode, production of a slurry composition for a positive electrode, production of a positive electrode, production of a negative electrode, production of an adhesive layer-equipped separator, and production of a lithium ion secondary battery were performed and various measurements and evaluations were carried out in the same way as in Example 1 with the exception that in production of the polymer (binder composition) in Example 1, the additive amount of acrylonitrile as a nitrile group-containing monomer was changed from 30 parts to 35 parts, the additive amount of methacrylic acid as a hydrophilic group-containing monomer was changed from 10 parts to 5 parts, the additive amount of t-dodecyl mercaptan as a chain transfer agent was changed from 2.50 parts to 1.5 parts, and the additive amount of the palladium catalyst was adjusted to change the palladium content relative to the weight of solid content contained in the water dispersion of the polymer precursor from 3,000 ppm to 300 ppm. The results are shown in Table 1.

**[Table 1]**

| | | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 | Comparative Example 4 |
|---|---|---|---|---|---|---|---|---|---|---|---|---|---|---|---|---|---|
| | | Nitrile group-containing monomer units [mass%] | 30 | 27 | 24 | 20 | 31 | 30 | 30 | 25 | 25 | 27 | 24 | 35 | 35 | 30 | 35 |
| | | Alkylene structural units + 1,3-butadiene units [mass%] | 60 | 54 | 47 | 40 | 62 | 60 | 60 | 55 | 55 | 54 | 47 | 60 | 65 | 60 | 60 |
| | Chemical composition | Hydrophilic group-containing monomer units [mass%] | 10 | 19 | 29 | 40 | 7 | 10 | 10 | 10 | 10 | 19 | 29 | 5 | 0 | 10 | 5 |
| Polymer | | (Meth)acrylic acid ester monomer units [mass%] | 0 | 0 | 0 | 0 | 0 | 0 | 0 | 10 | 0 | 0 | 0 | 0 | 0 | 0 | 0 |
| | | Aromatic vinyl monomer units [mass%] | 0 | 0 | 0 | 0 | 0 | 0 | 0 | 0 | 10 | 0 | 0 | 0 | 0 | 0 | 0 |
| | Weight-average molecular weight | | 25,000 | 30,000 | 30,000 | 30,000 | 30,000 | 180,000 | 25,000 | 25,000 | 25,000 | 30,000 | 30,000 | 100,000 | 60,000 | 350,000 | 55,000 |
| | Haze [%] | | 20 | 18 | 15 | 10 | 60 | 65 | 45 | 65 | 68 | 20 | 15 | 85 | 90 | 95 | 70 |
| | Iodine value [mg/100 mg] | | 10 | 20 | 30 | 40 | 10 | 40 | 80 | 50 | 50 | 10 | 30 | 60 | 105 | 40 | 120 |
| Dispersion medium | | | NMP | NMP | NMP | NMP | NMP | NMP | NMP | NMP | NMP | water | water | NMP | NMP | NMP | NMP |
| Conductive material | | | CNT | CNT | CNT | CNT | CNT | CNT | CNT | CNT | CNT | CNT | CNT | CNT | CNT | CNT | CNT |
| Volume-average particle diameter D50 ofCNTs [µm] | | | 3 | 4 | 4 | 3 | 3 | 5 | 7 | 7 | 7 | 5 | 6 | 8 | 8 | 8 | 8 |
| | Dispersibility of conductive material in conductive material dispersion liquid | | A | B | B | B | A | C | C | C | C | B | B | D | D | D | D |
| | Adsorbed amount of polymer to conductive material | | A | A | A | A | B | C | C | C | C | B | B | D | D | D | D |
| Evaluation | Viscosity stability of conductive material dispersion liquid | | A | A | B | B | A | C | C | C | C | A | B | D | D | D | D |
| | Cycle characteristics | | A | A | A | A | B | B | B | B | B | A | A | C | C | C | C |
| | High-temperature storage characteristics | | A | A | A | B | B | B | B | B | B | A | A | C | D | D | C |
| | Adhesiveness of positive electrode mixed material layer | | A | A | B | B | A | B | B | B | B | A | B | D | D | D | D |

It can be seen from Table 1 that it is possible to produce a conductive material dispersion liquid having excellent conductive material dispersibility by using the binder compositions of Examples 1 to 11, which each contain a polymer that includes a nitrile group-containing monomer unit, an alkylene structural unit, and a hydrophilic group-containing monomer unit and that has a proportional content of hydrophilic group-containing monomer units that is not less than a specific value, and for each of which an 8 mass% aqueous solution of the polymer has a haze of not more than a specific value at a pH of 8.0 or higher.

On the other hand, it can be seen that dispersibility of a conductive material in a produced conductive material dispersion liquid is poor when using the binder compositions of Comparative Examples 1 and 2, which each contain a polymer that includes a nitrile group-containing monomer unit, an alkylene structural unit, and a hydrophilic group-containing monomer unit but that has a proportional content of hydrophilic group-containing monomer units that is less than a specific value, and for each of which an 8 mass% aqueous solution of the polymer has a haze of more than a specific value at a pH of 8.0 or higher.

It can also be seen that dispersibility of a conductive material in a produced conductive material dispersion liquid is also poor when using the binder composition of Comparative Example 3, which contains a polymer that includes a nitrile group-containing monomer unit, an alkylene structural unit, and a hydrophilic group-containing monomer unit and that has a proportional content of hydrophilic group-containing monomer units that is not less than a specific value, but for which an 8 mass% aqueous solution of the polymer has a haze of more than a specific value at a pH of 8.0 or higher.

It can also be seen that dispersibility of a conductive material in a produced conductive material dispersion liquid is also poor when using the binder composition of Comparative Example 4, which contains a polymer that includes a nitrile group-containing monomer unit, an alkylene structural unit, and a hydrophilic group-containing monomer unit and for which an 8 mass% aqueous solution of the polymer has a haze of not more than a specific value at a pH of 8.0 or higher, but for which the proportional content of hydrophilic group-containing monomer units in the polymer is less than a specific value.

### INDUSTRIAL APPLICABILITY

According to the present disclosure, it is possible to provide a binder composition for a non-aqueous secondary battery positive electrode that is capable of producing a conductive material dispersion liquid having excellent conductive material dispersibility.

Moreover, according to the present disclosure, it is possible to provide a conductive material dispersion liquid for a non-aqueous secondary battery positive electrode having excellent conductive material dispersibility.

Furthermore, according to the present disclosure, it is possible to provide a slurry composition for a non-aqueous secondary battery positive electrode produced using this conductive material dispersion liquid for a non-aqueous secondary battery positive electrode.

Also, according to the present disclosure, it is possible to provide a positive electrode for a non-aqueous secondary battery formed using this slurry composition for a non-aqueous secondary battery positive electrode.

Moreover, according to the present disclosure, it is possible to provide a non-aqueous secondary battery including this positive electrode for a non-aqueous secondary battery.

## Claims

1. A binder composition for a non-aqueous secondary battery positive electrode comprising a polymer, wherein
the polymer includes a nitrile group-containing monomer unit, an alkylene structural unit, and a hydrophilic group-containing monomer unit,
proportional content of the hydrophilic group-containing monomer unit in the polymer is 6.5 mass% or more, and
an 8 mass% aqueous solution of the polymer has a haze of 70% or less at a pH of 8.0 or higher.

2. The binder composition for a non-aqueous secondary battery positive electrode according to claim 1, wherein total proportional content of the alkylene structural unit and a conjugated diene monomer unit in the polymer is not less than 30 mass% and not more than 80 mass%.

3. The binder composition for a non-aqueous secondary battery positive electrode according to claim 1, wherein proportional content of the nitrile group-containing monomer unit in the polymer is not less than 10 mass% and not more than 55 mass%.

4. The binder composition for a non-aqueous secondary battery positive electrode according to claim 1, wherein the polymer has an iodine value of not less than 5 mg/100 mg and not more than 100 mg/100 mg.

5. The binder composition for a non-aqueous secondary battery positive electrode according to claim 1, wherein the proportional content of the hydrophilic group-containing monomer unit in the polymer is 50 mass% or less.

6. The binder composition for a non-aqueous secondary battery positive electrode according to claim 1, wherein the polymer has a weight-average molecular weight of not less than 2,000 and not more than 200,000.

7. The binder composition for a non-aqueous secondary battery positive electrode according to claim 1, wherein the polymer does not include a (meth)acrylic acid ester monomer unit.

8. The binder composition for a non-aqueous secondary battery positive electrode according to claim 1, wherein the polymer does not include an aromatic vinyl monomer unit.

9. A conductive material dispersion liquid for a non-aqueous secondary battery positive electrode comprising: a conductive material including one or more carbon nanotubes; a dispersion medium; and the binder composition for a non-aqueous secondary battery positive electrode according to any one of claims 1 to 8.

10. The conductive material dispersion liquid for a non-aqueous secondary battery positive electrode according to claim 9, wherein a value of volume-average particle diameter D50 in a particle size distribution of dispersed particle diameter of the carbon nanotubes is not less than 0.1 µm and not more than 7.0 µm.

11. A slurry composition for a non-aqueous secondary battery positive electrode comprising: a positive electrode active material; and the conductive material dispersion liquid for a non-aqueous secondary battery positive electrode according to claim 9.

12. A positive electrode for a non-aqueous secondary battery comprising a positive electrode mixed material layer formed using the slurry composition for a non-aqueous secondary battery positive electrode according to claim 11.

13. A non-aqueous secondary battery comprising: the positive electrode for a non-aqueous secondary battery according to claim 12; a negative electrode; a separator; and an electrolyte solution.
